# EUROPEAN PATENT SPECIFICATION

(11) **EP 4 082 347 B1**
(45) Date of publication and mention of the grant of the patent: **01.05.2024**
(21) Application number: 19957958.2
(22) Date of filing: 23.12.2019
(51) Int. Cl.: A21C 11/24, A23L 7/109, A23L 7/113

(54) **NOODLE STRING CUTTING DEVICE, NOODLE MANUFACTURING DEVICE, AND NOODLE AND INSTANT NOODLE MANUFACTURING METHOD**
VORRICHTUNG ZUM SCHNEIDEN VON NUDELSTRÄNGEN, VERFAHREN ZUR NUDELHERSTELLUNG SOWIE VERFAHREN ZUR HERSTELLUNG VON NUDELN UND INSTANTNUDELN
DISPOSITIF DE COUPE DE FIL DE NOUILLES, DISPOSITIF DE FABRICATION DE NOUILLES ET PROCÉDÉ DE FABRICATION DE NOUILLES INSTANTANÉES

(43) Date of publication of application: 02.11.2022
(73) Proprietor: Sanyo Foods Co., Ltd., Minato-ku, Tokyo 107-0052 (JP)
(72) Inventor: NAGAYAMA, Yoshiaki, Tokyo 107-0052 (JP)
(74) Representative: Ricker, Mathias
(86) International application number: PCT/JP2019/050405
(87) International publication number: WO 2021/130825

(56) References cited:
- WO-A1-2013/065745
- JP-A- H0 884 554
- JP-A- H0 884 554
- JP-A- 2010 166 848
- JP-A- 2011 000 001
- JP-A- 2012 170 363
- JP-Y1- S38 005 799
- US-A1- 2011 138 636

## Description

### FIELD

The present invention relates to a noodle strand cutting device, a noodle production apparatus comprising the noodle strand cutting device, and noodles and a method for producing instant noodles using the noodle strand cutting device.

### BACKGROUND

Machine-made noodles, such as Chinese noodles, udon, and pasta, are produced by passing a kneaded product (also referred to as "dough") obtained by kneading, for example, a main raw material, such as wheat flour and starch, with auxiliary raw materials, such as water, salt, and brine, through rolling rollers to form a sheet-shaped raw noodle belt, and cutting and separating a noodle belt, which is obtained by stacking two raw noodle belts by a compound machine and passing them through subsequent rolling rollers to thin them to a predetermined thickness, into a plurality of noodle strands using a noodle strand cutting device comprising a pair of cutting rollers having a plurality of annular grooves. The noodle belt is fed between the pair of cutting rollers and cut into a plurality of noodle strands by the plurality of annular grooves. After cutting, the noodle strands in the annular grooves are removed from the annular grooves of each cutting roller by a scraper having a plurality of protrusions which engage with the plurality of annular grooves of the cutting rollers. The removed noodle strands form a noodle strand bundle which is removed from one (for example, the upper) cutting roller and a noodle strand bundle which is removed from the other (for example, the lower) cutting roller. The noodle strands of the two noodle strand bundles either fall directly onto a conveyor located directly under the noodle strand cutting device, or once accepted by a guide, are crimped vertically into a wavy shape while passing through the guide, and are then transferred onto the conveyor from the outlet of the guide. Thereafter, the noodle strands are formed into a noodle product through steps, such as steaming, cutting into single meal units, and drying.

When cutting noodle strands into single meal units, since the product will be defective if the quantity is below the lower limit of the product standard, it is important for the quantities of individual meal units to be made uniform. For example, if the quantity variation (standard deviation) is large, in order to ensure that the quantity does not fall below the lower limit of the product standard, it becomes necessary to increase the median value of the product standard, whereby production efficiency is reduced, and the production cost of the noodle product increases. Thus, attempts to suppress quantity variations have been made.

Patent Literature 1 (JP S48-056876 A) describes a "steamed noodle continuous production device, comprising a wire mesh conveyor 6 having a transport speed slower than the cutting speed of noodle strand cutting blade rollers 4, 4 which passes through a steaming box 8; a steamed noodle strand drawing conveyor 10 following the conveyor 6, wherein the transport speed of the conveyor 10 is set to substantially match the speed estimated by adjusting the cutting speed described above in consideration of the extension of noodle strands 5 by steaming; and a fixed-quantity cutting device 11 which is located at the end of the conveyor."

Patent Literature 2 (JP H10-084896 A) describes a "noodle strand loosening method, wherein when producing instant noodles in a bag or raw noodles, noodle strands which have undergone a steam process are stretched on a stretching conveyor, the stretched noodle strands are cut into single meals and introduced into a frame of a formwork conveyor, where they are loosened and shaped, and when stretching the noodle strands after steaming, compressed air is ejected at an angle from a nozzle which rotates or oscillates to the left and right and blown onto the noodle strands."

The US 2011/138636 A1 is the basis of the preamble of claim 1 and discloses an apparatus for cutting and ejecting noodles including: a pair of cutting blade rolls at which a plurality of toroidal-groove sections is formed, a cutting blade rolls cutting a noodle band and ejecting a plurality of noodles, a plurality of toroidal-groove sections having two or more depths, and the plurality of toroidal-groove sections being formed so as to be alternately or sequentially arrayed; a noodle scraper constituted of a plate body having a bent section extending along a longitudinal direction, the noodle scraper including a plurality of scraping tines formed in a comb form, the scraping tines being provided at one of long sides of the plate body and engaged with each of the toroidal-groove sections; a guide section disposed under the noodle scraper, transporting a plurality of the noodles that are dropped from the cutting blade rolls; and a feeding conveyer disposed under the guide section, feeding the plurality of noodles, wherein each scraping tine includes a tine-edge section, the plurality of tine-edge sections is engaged with the plurality of toroidal-groove sections at a front position and a rear position in a circumferential direction of the cutting blade rolls, in accordance with the depths of the toroidal-groove sections engaged with the scraping tines.

The WO 2013/065745 A1 discloses a method for producing noodles by cutting a noodle sheet into noodle shapes using a rotary cutting device including at least a pair of cutting rollers, scraping members, and an air current supply means including air current supply members. A noodle sheet is passed between the cutting rollers to cut the noodle sheet into noodle shapes, the noodles are scraped from the cutting rollers by the scraping members and are separated into upper and lower noodle bundles, and an air current is supplied to the cut noodles from the air current supply means.

The JP 2010/166848 A1 discloses a method for producing noodles by cutting a noodle sheet into noodle shapes using a rotary cutting device including at least a pair of cutting rollers, scraping members, and an air current supply means including air current supply members. A noodle sheet is passed between the cutting rollers to cut the noodle sheet into noodle shapes, the noodles are scraped from the cutting rollers by the scraping members and are separated into upper and lower noodle bundles, and an air current is supplied to the cut noodles from the air current supply means.

### [CITATION LIST]

### [PATENT LITERATURE]

[PTL 1] JP S48-056876 A
[PTL 2] JP H10-084896 A

### SUMMARY

### [TECHNICAL PROBLEM]

However, when cutting noodle strands into single meal units, if the process of stretching noodle strands as described in Patent Literature 1 and Patent Literature 2 is adopted in order to reduce the quantity variation of the single meal units, the long production line is required, which restricts the arrangement of production equipment. Furthermore, since the surfaces of the noodle strands gelatinized in the steaming process are sticky, and the noodle strands tend to adhere to each other, a loosening liquid is typically sprayed onto the noodle strands immediately before or during the stretching process of the noodle strands. Thus, from the viewpoint of production efficiency, conventionally, noodle strand bundles cut from the noodle strand cutting device are folded in half or stacked in two layers without the use of a stretching process. When noodle strand bundles are folded in half or stacked in two layers, there remains a problem in that there are significant quantity variations because there is no noodle strand stretching process.

The present disclosure provides a noodle strand cutting device and a noodle production apparatus with which quantity variations can be suppressed when cutting noodle strands into single meal units in a noodle production method.

### [SOLUTION TO PROBLEM]

The present inventors have discovered that the above object can be achieved by applying an external force to a part of noodle strands removed from annular grooves of a cutting roller in a predetermined direction to change the direction of travel of the noodle strands and/or delay the progress of the noodle strands, and have completed the present invention.

The problem of the present invention is solved by a noodle strand cutting device according to the independent claim 1 as well as by a method for producing noodles according to the independent claim 6. The dependent claims refer to further advantageous developments of the present invention.

### [ADVANTAGEOUS EFFECTS OF INVENTION]

According to the present invention, quantity variations can be suppressed when cutting noodle strands into single meal units in a noodle production method.

The above descriptions shall not be deemed to disclose all embodiments of the invention and all advantages relating to the invention.

### BRIEF DESCRIPTION OF DRAWINGS

FIG. 1 is a schematic cross-sectional view of cutting rollers of a noodle strand cutting device according to an embodiment as viewed from the axial direction.
FIG. 2 is a schematic cross-sectional view detailing a state in which the direction of travel of a noodle strand scraped from a cutting roller is changed by a comb plate.
FIG. 3 is a schematic perspective view of a comb plate and a scraper according to an embodiment.
FIG. 4 is a schematic plan view of a noodle strand cutting device according to an embodiment as viewed from the front of the side where the noodle strands are output.
FIG. 5 is a schematic cross-sectional view detailing a noodle strand cutting process using the noodle strand cutting device according to an embodiment.

### DESCRIPTION OF EMBODIMENTS

The present invention will be described in more detail below with reference to the drawings in order to illustrate typical embodiments of the present invention, but the present invention is not limited to these embodiments. Regarding the reference signs of the drawings, elements assigned similar signs in different drawings indicate similar or corresponding elements.

As used herein, "noodles" mean a food which comprises wheat flour, starch, rice flour, buckwheat flour, bean flour, etc., as the main ingredient, which is processed into a linear shape, and which can be eaten when cooked by boiling, simmering, stir-frying, hot water immersion, or heating in a microwave oven with or without water immersion. Examples of noodles include udon, *kishimen* noodles, Chinese noodles, soba, pasta, etc. Examples of the state of noodles before cooking include raw noodles, dried noodles, steamed noodles, boiled noodles, frozen noodles, and instant noodles.

As used herein, "instant noodles" mean, among the noodles, a food which can be stored for a long period of time by heating and drying raw noodles, steamed noodles, or boiled noodles, and removing the moisture contained in the noodles to approximately 2 to 10 % by mass in the case of fry-drying, and to approximately 6 to 14.5 % by mass in the case of hot-air drying. "Dried noodles" are noodles which do not include a gelatinization step in the production process and which are dried at room temperature or low temperature for a long period of time. In the present disclosure, dried noodles are distinguished from instant noodles and excluded from instant noodles.

As used herein, "dough" means a kneaded product of a main ingredient and auxiliary ingredients, such as water, salt, and brine. A kneader, planetary mixer, etc., can be used in the kneading of the main ingredient and the auxiliary ingredients. The shape of the dough is generally irregular, but it may be formed into a cylindrical shape, a square tubular shape, etc., using an extruder or the like after kneading.

As used herein, "noodle belt" means a product in which dough is processed into a sheet-like shape having a thickness suitable for being cut into noodle strands. As a processing method, two or three raw noodle belts, which are intermediates formed during rolling, are stacked by a compound machine and then further rolled through subsequent rollers. Another processing method is to extrude the dough directly into a sheet with an extruder.

As used herein, "noodle strands" mean noodles which are mechanically cut from a noodle belt by a noodle strand cutting device. The cross-sectional shape of noodle strands may be circular, elliptical, square, rectangular, or a combination of a part of these shapes, or a shape having a contour formed of a combination of the same shapes having different thicknesses, and the corners thereof may be chamfered.

As used herein, "noodle strand bundle" means a group of a plurality of noodle strands cut from a single cutting roller having a plurality of annular grooves arranged in parallel. When a noodle strand cutting device comprising a pair of cutting rollers is used, noodle strand bundles are output from the respective cutting rollers. These two noodle strand bundles are usually stacked and processed in subsequent steps.

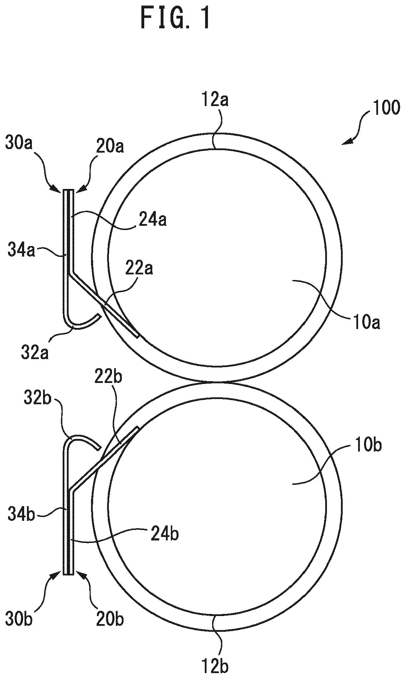

FIG. 1 is a schematic cross-sectional view of cutting rollers of a noodle strand cutting device according to an embodiment as viewed from the axial direction. The noodle strand cutting device 100 comprises a pair of cutting rollers 10a, 10b, each having a plurality of annular grooves 12a, 12b which are arranged in parallel so that the annular grooves of the cutting rollers face and mesh with each other; scrapers 20a, 20b comprising plate-shaped parts 24a, 24b which extend along a longitudinal direction of the cutting rollers 10a, 10b, and a plurality of protrusions 22a, 22b extending on long sides of the plate-shaped parts 24a, 24b in a direction substantially orthogonal to the long sides, each of the plurality of protrusions 22a, 22b being configured so as to engage with a corresponding one of the plurality of annular grooves 12a, 12b of the cutting rollers 10a, 10b so that noodle strands in the plurality of annular grooves 12a, 12b are scraped from the cutting rollers 10a, 10b; and comb plates 30a, 30b having a plurality of protrusions 32a, 32b which are arranged so as to align with the centers of the plurality of annular grooves 12a, 12b along the longitudinal direction of the cutting rollers 10a, 10b, the plurality of protrusions 32a, 32b being configured so as to contact the noodle strands at positions where the noodle strands are not in contact with the cutting rollers 10a, 10b and the plurality of protrusions 22a, 22b of the scrapers 20a, 20b. Though not shown in FIG. 1, the plurality of protrusions 32a, 32b of the comb plates 30a, 30b are alternatingly arranged relative to the plurality of annular grooves 12a, 12b of the cutting rollers 10a, 10b. As used herein, "arranged so as to align with the center" means that the center line passing through the width direction center of an annular groove and orthogonal to the width direction and the center line passing through the width direction center of a protrusion of a comb plate and orthogonal to the width direction are aligned so as to overlap.

Though the plurality of protrusions 32a, 32b of the comb plates are respectively arranged so as to align with the centers of the plurality of annular grooves 12a, 12b along the longitudinal direction of the cutting rollers 10a, 10b in FIG. 1, the protrusions of the comb plates may be shifted from the centers of the annual grooves along the longitudinal direction of the cutting rollers. The protrusions of the comb plates may be shifted to the right from the centers of the annual grooves, or may be shifted to the left therefrom. Each of the plurality of protrusions of the comb plates may be shifted from the center of the corresponding annular groove of the plurality of annular grooves to a non-regular side, may be shifted at an irregular distance, or may be shifted by a combination of these.

The noodle strand cutting device may further comprise, as needed, a guide for receiving the cut noodle strands. The guide may also be referred to as a conduit, guide tube, or "wavebox." The cutting rollers, scrapers, comb plates, and optional guide may be attached to a frame-shaped housing formed of stainless steel, iron, or the like.

Any known cutting rollers which are used in noodle strand cutting devices can be used as the pair of cutting rollers. The pair of cutting rollers have a plurality of annular grooves which are arranged in parallel so as to face and mesh with each other. There are convex parts between the plurality of annular grooves of the cutting rollers. Each cutting roller is connected to a drive device, such as a motor, via a gear, and by passing the noodle belt between the cutting rollers while rotating the pair of cutting rollers in opposite directions to each other, the noodle belt is cut into noodle strands by the convex parts of one cutting roller and the annular grooves of the other cutting roller. The noodle strands formed by cutting the noodle belt enter the annular grooves of the cutting rollers.

Stainless steel, iron, etc., can be used as the material of the cutting rollers.

In an embodiment, the pair of cutting rollers are arranged aligned in the horizontal direction, and the noodle strands scraped with the scrapers move (fall) in the vertical direction. In another embodiment, the pair of cutting rollers are arranged side by side at an angle of greater than 0 degrees and 90 degrees or less from the horizontal direction, and the noodle strands scraped by the scrapers fall while moving diagonally downward.

The cross-section of the annular grooves may be semicircular, semi-elliptical, square, rectangular, triangular, or a combination of a part of these shapes, or a shape having a contour formed of a combination of the same shapes having different annular groove depths, and the corners thereof may be chamfered. The convex parts between the annular grooves can be planar surfaces, curved surfaces, a combination of two or more planar surfaces, or a combination of a curved surface and one or more planar surfaces.

In an embodiment, the width of the annular grooves is 0.75 mm or more, 1.0 mm or more, 1.07 mm or more, 1.15 mm or more, 1.25 mm or more, 1.36 mm or more, 1.5 mm or more, or 1.68 mm or more, and is 3.0 mm or less, 2.5 mm or less, or 2.0 mm or less. For example, the width of the annular grooves can be 0.75 mm to 3.0 mm, 1.0 mm to 2.5 mm, or 1.07 mm to 2.0 mm. The present invention is more effective for noodle strands cut by such annular grooves having a width which is conventionally used in the production of ramen.

Any known scraper which is used in noodle strand cutting devices can be used as the scrapers. The scraper has a plate-shaped part extending along the longitudinal direction of the cutting rollers, and a plurality of protrusions extending on a long side of the plate-shaped part in a direction substantially orthogonal to the long side. Each of the plurality of protrusions engages with a corresponding one of the plurality of annular grooves of the cutting rollers so that noodle strands in the plurality of annular grooves are scraped from the cutting rollers. The noodle strands scraped from one of the cutting rollers form a noodle strand bundle composed of a group of a plurality of noodle strands aligned along the axial direction of the cutting rollers, and move in the vertical direction or along the downward inclined direction. Thus, two noodle strand bundles are formed from the pair of cutting rollers. The scraper can also be referred to as a chisel. In rare cases, the remnants of noodle strands may remain on the cutting rollers. In order to remove the noodle strand remnants from the cutting rollers, the scraper may be provided with a plurality of protrusions each of which is in contact with one of the convex parts between the plurality of annular grooves.

The plate-shaped part of the scraper functions as a support member for holding the plurality of protrusions at predetermined positions, and can also absorb the stresses applied to the plurality of protrusions. The scraper can be affixed to a housing with bolts or the like using the plate-shaped part of the scraper.

The plurality of protrusions of the scraper may extend straight or may include bent portions or curved portions. The corners of the plurality of protrusions may be chamfered.

The scraper can be obtained by forming comb-shaped notches on one side of one plate to form the plurality of protrusions. The plate may be bent so as to have one or two or more obtuse angles, and a portion corresponding to the plurality of protrusions, a portion corresponding to the boundary between the plurality of protrusions and the plate-shaped part, or both may be bent or curved. As the material of the scraper, brass, phosphor bronze, stainless steel or the like can be used. Brass and phosphor bronze are easy to process, and stainless steel has excellent durability.

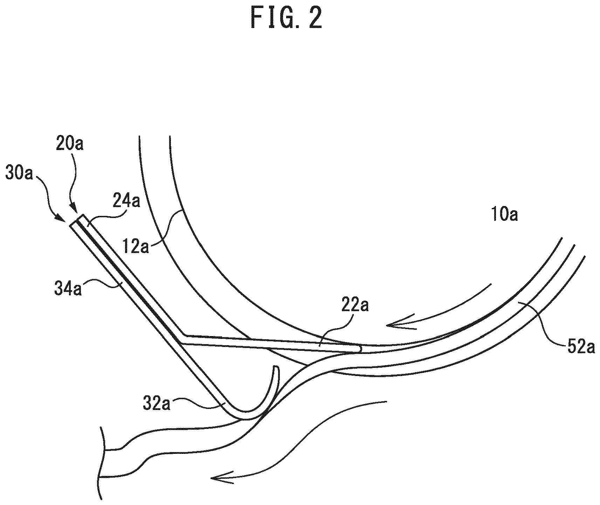

FIG. 2 is a schematic cross-sectional view detailing a state in which the direction of travel (the directions of the velocity vector of the noodle strand just before and immediately after the noodle strand comes into contact with the protrusion of the comb plate) of a noodle strand scraped from a cutting roller is changed by a comb plate. In FIG. 2, a noodle strand 52a in the annular groove 12a of one cutting roller 10a is scraped from the cutting roller by the protrusion 22a of the scraper 20a engaged with the annular groove 12a, and moves diagonally downward. The protrusion 32a of the comb plate 30a contacts the noodle strand 52a at a position where the noodle strand 52a is not in contact with the cutting roller 10a and the protrusion 22a of the scraper 20a. At that time, the noodle strand 52a receives an external force from the protrusion 32a, and the direction of travel of the noodle strand 52a which is being scraped and moved from the cutting roller 10a is changed as indicated by the curved arrow in FIG. 2.

The direction of travel of all noodle strands contacting the protrusions of the comb plates may be changed, or the direction of travel of some noodle strands contacting the protrusions of the comb plates may be changed and the direction of travel of the remaining noodle strands contacting the protrusions of the comb plates may not be changed. The direction of travel of the noodle strands contacting the protrusions of the comb plates may be changed in various directions, and is not limited to the direction indicated by the curved arrow in FIG. 2.

As shown in FIGs. 1 and 2, the plurality of protrusions of the comb plates are neither engaged with nor inserted into the plurality of annular grooves of the cutting rollers. Thus, the comb plate does not have a function to scrape noodle strands in the plurality of annular grooves of the cutting rollers.

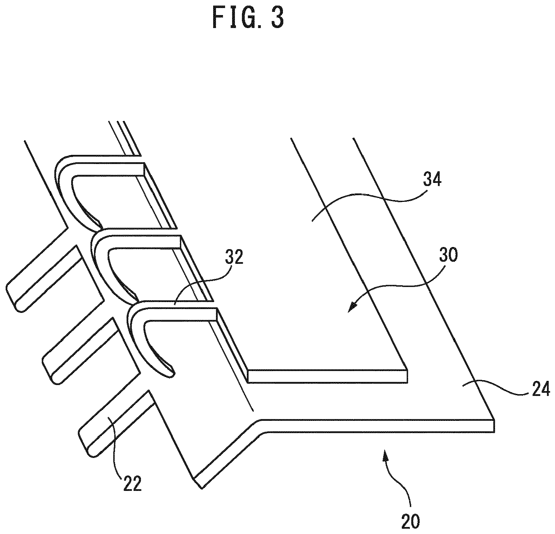

In an embodiment, as shown in the schematic perspective view of FIG. 3, the comb plate 30 comprises a plate-shaped part 34 which extends along the longitudinal direction of the cutting rollers, and a plurality of protrusions 32 extending on a long side of the plate-shaped part 34 in a direction substantially orthogonal to the long side, and the plate-shaped part 34 of the comb plate 30 is arranged overlaid on the plate-shaped part 24 of the scraper 20. The plate-shaped part of the comb plate and the plate-shaped part of the scraper may be overlapped with each other, and the comb plate and the scraper may be affixed to a housing together with bolts or the like.

The plurality of protrusions of the comb plate may extend straight or may include a bent portion or a curved portion. The corners of the plurality of protrusions may be chamfered.

The comb plate can be obtained by forming comb-shaped notches on one side of one plate to form the plurality of protrusions. The plate may be bent so as to have one or more obtuse angles, and a portion corresponding to the boundary between the plurality of protrusions and the plate-shaped part may be bent or curved. The comb plate can also be formed using a resin molding technique, such as compression molding, injection molding, or casting. In FIG. 3, the comb plate is composed of one piece, but the comb plate may be formed by overlapping two or more members having protrusions.

As the material of the comb plate, for example, metallic materials, such as brass, phosphor bronze, and stainless steel, rubbers, such as natural rubber, styrene butadiene rubber (SBS), and silicone rubber, or thermoplastic resins, such as an acrylic resin, can be used. Brass, phosphor bronze, rubber, and plastic are easy to process, and stainless steel has excellent durability. The surfaces of the plurality of protrusions may be plated with nickel or the like, or coated with a fluororesin or the like.

In an embodiment, the plurality of protrusions of the comb plate have a raised shape which imparts a force onto the noodle strand in a direction different from a direction of travel of the noodle strand which has been scraped from the cutting roller and separated from the scraper. Examples of the cross-sectional shape of the protrusions having a raised shape along the direction of travel of the noodle strands include a hook-shaped bent shape, a semicircular or arched shape, a triangular shape, a trapezoidal shape, etc. FIGs. 1, 2 and 3 show protrusions 32, 32a, 32b having hook-shaped cross sections along the direction of travel of the noodle strands.

The width of the plurality of protrusions of the noodle strand orientation changing member may be the same as the width of the annular grooves of the cutting rollers, may be greater than the width of the annular grooves of the cutting rollers, or may be less than the width of the annular grooves of the cutting rollers. In an embodiment, the width of the plurality of protrusions of the noodle strand orientation changing member is 50 % to 150 %, 50 % to 120 %, or 80 % to 100 % of the width of the annular grooves of the cutting rollers.

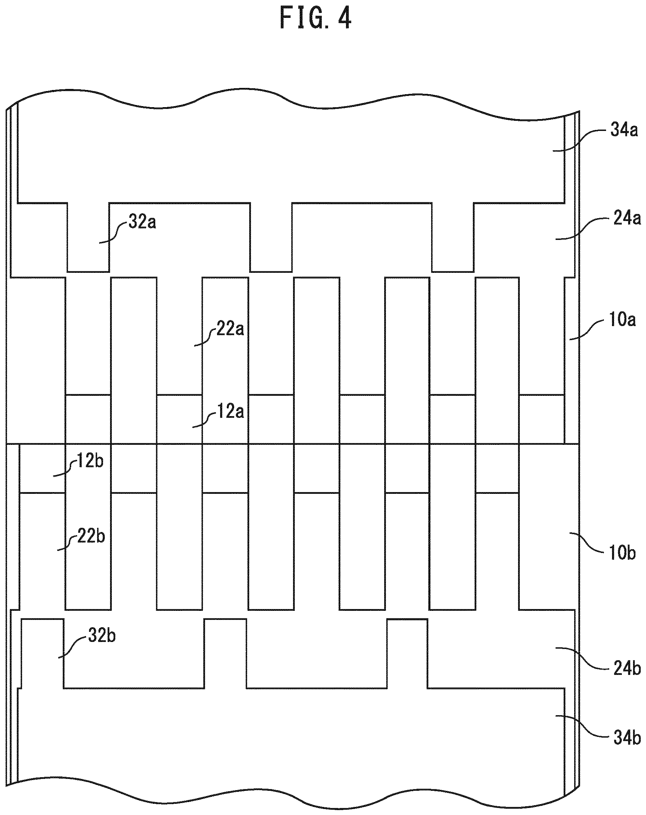

The plurality of protrusions of the comb plate are alternatingly arranged with respect to the plurality of annular grooves of the cutting rollers. FIG. 4 shows a schematic plan view of the noodle strand cutting device of an embodiment as viewed from the front of the side where the noodle strands are output. In FIG. 4, the plurality of protrusions 22a, 22b of the scrapers engage with the plurality of annular grooves 12a, 12b of the cutting rollers 10a, 10b, and the plurality of protrusions 32a, 32b of the comb plates are alternatingly arranged with respect to the plurality of annular grooves 12a, 12b of the cutting rollers 10a, 10b. Though a certain noodle strand in one noodle strand bundle comes into contact with a protrusion of the comb plate and the direction of travel thereof is changed in this embodiment, the noodle strands adjacent to that noodle strand of the same noodle strand bundle do not contact the protrusions of the comb plates and the directions of travel thereof are not changed. As a result, a shift in the direction of travel of the noodle strands or a shift in the period or phase of the crimping caused by a delay in the progress of the noodle strands occurs between the noodle strands that have come into contact with the protrusions of the comb plates and the noodle strands that have not come into contact therewith. On the other hand, conventional crimps are formed in noodle strands that have not come into contact with the protrusions of the comb plates. Thus, the regularity of the direction of travel or the regularity of the period or phase of the crimping of some noodle strands contained in one noodle strand bundle can be lost, whereby the noodle strand mass per unit length of the noodle strand bundle can be made more uniform while maintaining the crimped shape. Generally, in the production of noodle products, in the step of cutting noodle strands into single meal units, in consideration of production errors and the like, the noodle strands are cut at, for example, 105 % of the single meal amount as a target value, so that the mass of noodle strands does not fall below the single meal amount. By making the noodle strand mass per unit length of the noodle strand bundle more uniform, it is possible to reduce production errors which should be considered in the step of cutting the noodle strands into single meal units. As a result, the noodle strands can be cut at a target value closer to the single meal amount, i.e., a target value closer to 100 %, whereby the production cost of the noodle product can be effectively reduced.

In an embodiment, the noodle strand cutting device further comprises a guide which receives the cut noodle strands. Any known guide which is used in noodle strand cutting devices and which has a function of receiving noodle strands scraped from the cutting roller by the scraper and thereafter directing the noodle strands onto a conveyor can be used as the guide. The guide may further comprise a divider which divides the noodle strand bundle, arranged along the longitudinal direction of the cutting roller. The guide is generally arranged, directly below or diagonally below the pair of cutting rollers and between the pair of cutting rollers and the conveyor, vertically so that the noodle strands move vertically, or inclined so that the noodle strands move diagonally downward.

The guide is generally gutter-shaped, plate-shaped, or tubular and can be formed using a material, such as stainless steel or plastic. The upper side of the guide may be open, or a lid which can be opened and closed and which can adjust the height of the opening may be disposed on the upper side of the guide. The lid may be attached to the guide, integrally formed with the guide, or attached to a portion separate from the guide, such as a housing equipped with the cutting rollers. The guide and the lid may be made of the same material or may be made of different materials. For example, when the guide is made of stainless steel, the lid may be a sheet made of soft plastic or silicone rubber.

A conveyor can be arranged directly below the cutting rollers or below the outlet of the guide. The conveyor is not particularly limited, and may be a wire mesh conveyor, net conveyor, belt conveyor, etc. The cut noodle strands are transferred onto the conveyor either directly or via the guide. The two noodle strand bundles formed by the pair of cutting rollers are stacked vertically on the conveyor or guide and transferred to subsequent steps for processing.

The transfer speed of the conveyor arranged directly below the noodle strand cutting device is generally less than the rotational speed of the cutting rollers, i.e., less than the cutting speed of the noodle strands. The cut noodle strands, when transferred onto the conveyor, or while moving on the guide, are crimped due to resistance caused by the difference between the transfer speed of the conveyor and the cutting speed of the noodle strands. The state of such crimped noodle strands may be expressed as "wavy" from the shape thereof. When guiding the noodle strands onto the conveyor via a guide having an upper lid, since the noodle strands are crimped in the more constrained space defined by the guide and the lid, the degree of crimps of the noodle strands, i.e., the magnitude of the "waviness" can be made more uniform. When a guide with an upper lid is not used, it is desirable to arrange the conveyor directly under the cutting rollers in order to form crimps in the noodle strands. When the cutting rollers and the conveyor are spaced apart, the noodle strands may not be crimped. Since the distance between the cutting rollers and the conveyor for forming crimps in the noodle strands depends on the raw materials of the noodle strands, production conditions, etc., the conveyor may be "directly below" the cutting rollers to the extent that the noodle strands are crimped. The arrangement of the conveyor and the distance between the cutting rollers and the conveyor are not limited when forming crimps in the noodle strands using a guide having an upper lid.

When steaming the noodle strands, a conveyor which transfers the noodle strand bundle at a slightly higher speed than the conveyor described above may be arranged immediately after the conveyor or in a subsequent step. When steaming, if the density of crimps is too high, the noodle strands may bind to each other due to gelatinization of the surfaces of the noodle strands. However, even if the noodle strand bundle, in which the density of crimping is sparse enough to prevent the binding between noodle strands, is attempted to be made only by the cutting speed of the cutting rollers and the transfer speed of the conveyor, it may be difficult to create crimps of a suitable shape. Thus, on the conveyor immediately after the noodle strand cutting device, a noodle strand bundle having dense crimping is produced, and thereafter, it can be transferred to a conveyor which transfers the noodle strand bundle at a slightly higher speed before steaming, whereby the density of crimps can be reduced to the extent that the noodle strands do not bind to each other during steaming. By the slightly increased conveyor speed, the production efficiency of subsequent steps can be improved.

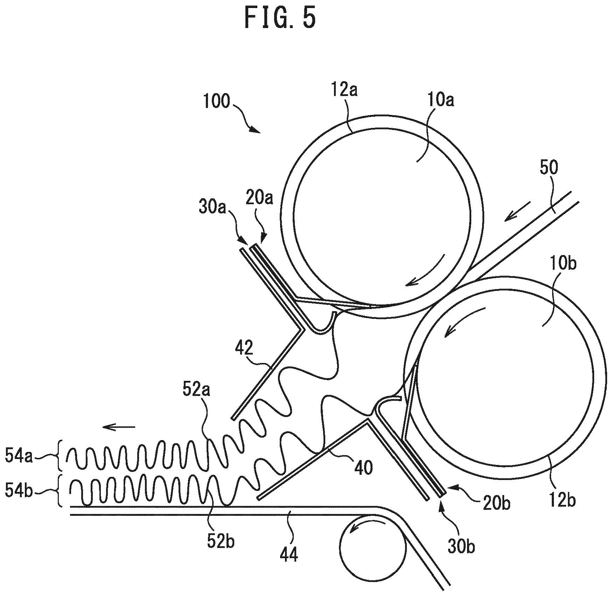

FIG. 5 shows a schematic cross-sectional view detailing a noodle strand cutting process using the noodle strand cutting device 100 according to an embodiment. A noodle belt 50 passes between the pair of cutting rollers 10a, 10b which rotate in directions opposite to each other. The cutting rollers 10a, 10b cut the noodle belt 50 into a respective plurality of noodle strands 52a, 52b. The noodle strands 52a, 52b in the annular grooves 12a, 12b of the cutting rollers 10a, 10b are scraped from the cutting rollers 10a, 10b by the protrusions (with respect to which reference signs are not shown) of the scrapers 20a, 20b and formed into an upper noodle strand bundle 54a and a lower noodle strand bundle 54b, respectively, and progress diagonally downward. Thereafter, some of the noodle strands 52a, 52b come into contact with the protrusions (with respect to which reference signs are not shown) of the comb plates 30a, 30b, and the direction of travel of the contacted noodle strands 52a, 52b is changed. A guide 40 and a lid 42 are arranged diagonally below the cutting rollers 10a, 10b and between the cutting rollers 10a, 10b and a conveyor 44. The noodle strands 52a, 52b are crimped due to the difference between the transfer speed of the conveyor 44 and the rotation speeds of the cutting rollers 10a, 10b, i.e., the cutting speed of the noodle strands, while passing through the constrained space defined by the guide 40 and lid 42. In the interior or outlet of the guide 40, the upper noodle strand bundle 54a containing the noodle strands 52a and the lower noodle strand bundle 54b containing the noodle strands 52b are overlapped and transferred to a subsequent step, such as steaming, by the conveyor 44.

A noodle production apparatus of an embodiment comprises the noodle strand cutting device described above. The noodle production apparatus may comprise a main ingredient and auxiliary ingredient supply device, such as a hopper, a mixing device for kneading the main ingredient and auxiliary ingredients, such as a kneader and a planetary mixer, an extruder, rolling rollers and a compound machine for forming a noodle belt from dough, a conveyor which transfers noodle strand bundles, a steamer which gelatinizes starch contained in the noodle strands, a cutting machine which cuts the noodle strand bundles to the length of one serving, a fry-dryer or hot-air dryer, a packaging machine, etc.

A method for producing noodles of an embodiment comprises cutting a noodle belt formed from dough into a plurality of noodle strands using the noodle strand cutting device described above.

The method for producing noodles of an embodiment further comprises cutting the plurality of cut noodle strands into single meal units, and folding the plurality of noodle strands cut into single meal units in half or stacking them in two layers. The cutting into single meal units may be performed prior to gelatinization of the noodle strands, or may be performed after gelatinization. The folding of the plurality of noodle strands in half can be performed using a folding method by pushing the noodle strands from the side (the direction orthogonal to the hanging noodle strands) with a plate-shaped pushing member in a state in which the noodle strands, which have been cut in at least one location in a direction orthogonal to the direction of travel of the conveyor, are hanging vertically (below the conveyor). The pushing member returns to the position prior to pushing before the folding of the noodle strands is completed. The plurality of noodle strands may be cut into a single meal unit and then folded, or may be folded and cut into a single meal unit at the same time. Two-layer stacking of the plurality of noodle strands can be performed by stacking the cut noodle strands in a single meal unit. A synchronization mechanism that waits for noodle strands in the same row in the direction of travel may be provided, or noodle strands parallel to the direction of travel may be overlaid.

A method for producing instant noodles of an embodiment comprises cutting a noodle belt formed from dough into a plurality of noodle strands using the noodle strand cutting device described above, steaming and gelatinizing the cut noodle strands, and drying the gelatinized noodle strands. The instant noodles may be fried noodles or hot-air dried noodles.

The method for producing instant noodles of an embodiment comprises cutting a noodle belt formed from dough into a plurality of noodle strands using the noodle strand cutting device described above, steaming and gelatinizing the noodle strands, cutting the noodle strands into single meal units, folding the noodle strands in half or stacking them in two layers, and drying the noodle strands. The instant noodles may be fried noodles or hot-air dried noodles. The gelatinization, cutting into single meal units, and folding or stacking in two layers may be performed in any order.

The method for producing instant noodles of an embodiment comprises cutting a noodle belt formed from dough into a plurality of noodle strands using the noodle strand cutting device described above, steaming and gelatinizing the cut noodle strands, cutting the gelatinized noodle strands into single meal units, folding the noodle strands cut into single meal units in half or stacking them in two layers, and drying the folded or stacked noodle strands. The instant noodles may be fried noodles or hot-air dried noodles.

The method for producing noodles or instant noodles of an embodiment does not include stretching the cut noodle strands when cutting the noodle strands into single meal units in order to reduce quantity variations in the single meal units. For example, the method for producing noodles or instant noodles does not include stretching the gelatinized noodle strands when cutting the noodle strands into single meal units in order to reduce quantity variations in the single meal units. The stretching of the noodle strands can be performed by providing a conveyor which transfers noodle strand bundles at a high speed faster than a conveyor immediately after cutting of the noodle strands, and a conveyor which transfers noodle strand bundles slightly faster to reduce the density of crimping during steaming. When a noodle strand bundle is transferred to a high-speed conveyor, the noodle strands are stretched. Since the speed of the high-speed conveyor differs in accordance with the line length from the noodle strand cutting device to the cutting into single meal units, it can appropriately be determined so that the noodle strands are stretched during cutting into single meal units. Since the method for producing noodles or instant noodles does not include stretching of the noodle strands, the line length can be shortened and the application of a loosening solution is not required, whereby production can be efficiently performed.

### REFERENCE SIGNS LIST

- 100: noodle strand cutting device
- 10, 10a, 10b: cutting roller
- 12, 12a, 12b: annular groove
- 20, 20a, 20b: scraper
- 22, 22a, 22b: protrusion of scraper
- 24, 24a, 24b: plate-shaped part of scraper
- 30, 30a, 30b: comb plate
- 32, 32a, 32b: protrusion of comb plate
- 34, 34a, 34b: plate-shaped part of comb plate
- 40: guide
- 42: lid
- 44: conveyor
- 50: noodle belt
- 52a, 52b: noodle strand
- 54a: upper noodle strand bundle
- 54b: lower noodle strand bundle

## Claims

1. A noodle strand cutting device (100), comprising:
a pair of cutting rollers (10a, 10b), each having a plurality of annular grooves (12a, 12b), which are arranged in parallel so that the annular grooves (12a, 12b) of one cutting roller (10a, 10b) face and mesh with those of the other cutting roller (10a, 10b), and
a scraper (20a, 20b) comprising a plate-shaped part (24a, 24b) which extends along a longitudinal direction of the cutting rollers (10a, 10b) and a plurality of protrusions (22a, 22b) extending on a long side of the plate-shaped part (24a, 24b) in a direction substantially orthogonal to the long side, each of the plurality of protrusions (22a, 22b) being configured so as to engage with a corresponding one of the plurality of annular grooves (12a, 12b) of the cutting rollers (10a, 10b) so that noodle strands in the plurality of annular grooves (12a, 12b) are scraped from the cutting rollers (10a, 10b), **characterized in that** the noodle strand cutting device (100) further comprises:
a comb plate (30a, 30b) having a plurality of protrusions (32a, 32b) which are arranged so as to align with the centers of the plurality of annular grooves (12a, 12b) along the longitudinal direction of the cutting rollers (10a, 10b), the plurality of protrusions (32a, 32b) being configured so as to be alternatingly arranged relative to the plurality of annular grooves (12a, 12b) of the cutting rollers (10a, 10b) and to contact the noodle strands at positions where the noodle strands are not in contact with the cutting rollers (10a, 10b) and the plurality of protrusions (22a, 22b) of the scraper (20a, 20b).

2. The noodle strand cutting device (100) according to claim 1, wherein the plurality of protrusions (32a, 32b) of the comb plate (30a, 30b) has a raised shape which imparts a force onto the noodle strand in a direction orthogonal to a direction of travel of the noodle strand, which has been scraped from the cutting roller (10a, 10b and separated from the scraper (20a, 20b), and the width direction of the noodle strand.

3. The noodle strand cutting device (100) according to claim 1 or 2, wherein the comb plate (30a, 30b) comprises a plate-shaped part (34a, 34b) which extends along the longitudinal direction of the cutting rollers (10a, 10b) and the plurality of protrusions (32a, 32b) on a long side of the plate-shaped part (34a, 34b) which extend in a direction substantially orthogonal to the long side, and the plate-shaped part (34a, 34b) of the comb plate (30a, 30b) is arranged overlaid on the plate-shaped part (24a, 24b) of the scraper (20a, 20b).

4. The noodle strand cutting device (100) according to any one of claims 1 to 3, further comprising a guide (40) for receiving the cut noodle strands.

5. A noodle production apparatus comprising the noodle strand cutting device (100) according to any one of claims 1 to 4.

6. A method for producing noodles, comprising cutting a noodle belt formed from dough into a plurality of noodle strands using the noodle strand cutting device (100) according to any one of claims 1 to 4.

7. The method for producing noodles according to claim 6, further comprising cutting the plurality of cut noodle strands into single meal units, and folding the plurality of noodle strands cut into single meal units in half or stacking them in two layers.

8. The method for producing noodles according to claim 6, further comprising:
steaming and gelatinizing the noodle strands;
cutting the noodle strands into single meal units;
folding the noodle strands in half or stacking them in two layers; and
drying the noodle strands,
wherein the noodles are instant noodles.

## Patentansprüche

1. Nudelstrangschneidevorrichtung (100), welche aufweist:
ein Paar an Schneidwalzen (10a, 10b), die jeweils eine Vielzahl an ringförmigen Rillen (12a, 12b) aufweisen, die parallel angeordnet sind, so dass die ringförmigen Rillen (12a, 12b) einer Schneidwalze (10a, 10b) denen der anderen Schneidwalze (10a, 10b) gegenüberliegen und in diese eingreifen, und
einen Abstreifer (20a, 20b), der einen plattenförmigen Teil (24a, 24b), der sich entlang einer Längsrichtung der Schneidwalzen (10a, 10b) erstreckt, und eine Vielzahl an Vorsprüngen (22a, 22b) aufweist, die sich auf einer langen Seite des plattenförmigen Teils (24a, 24b) in einer Richtung im Wesentlichen orthogonal zu der langen Seite erstrecken, wobei jeder der Vielzahl der Vorsprünge (22a, 22b) so ausgestaltet ist, dass er mit einer entsprechenden der Vielzahl der ringförmigen Rillen (12a, 12b) der Schneidwalzen (10a, 10b) in Eingriff kommt, so dass Nudelstränge in der Vielzahl der ringförmigen Rillen (12a, 12b) von den Schneidwalzen (10a, 10b) abgeschabt werden, **dadurch gekennzeichnet, dass** die Nudelstrangschneidvorrichtung (100) ferner aufweist:
eine Kammplatte (30a, 30b), die eine Vielzahl an Vorsprüngen (32a, 32b) aufweist, die so angeordnet sind, dass sie mit den Zentren der Vielzahl der ringförmigen Rillen (12a, 12b) entlang der Längsrichtung der Schneidwalzen (10a, 10b) fluchten, wobei die Vielzahl der Vorsprünge (32a, 32b) so ausgestaltet ist, dass sie mit den Zentren der Schneidwalzen (10a, 10b) fluchten, 32b) so ausgestaltet sind, dass sie abwechselnd relativ zu der Vielzahl der ringförmigen Rillen (12a, 12b) der Schneidwalzen (10a, 10b) angeordnet sind und die Nudelstränge an Positionen berühren, an denen die Nudelstränge nicht in Kontakt mit den Schneidwalzen (10a, 10b) und der Vielzahl der Vorsprünge (22a, 22b) des Abstreifers (20a, 20b) sind.

2. Nudelstrangschneidvorrichtung (100) nach Anspruch 1, wobei die Vielzahl der Vorsprünge (32a, 32b) der Kammplatte (30a, 30b) eine erhabene Form aufweist, die eine Kraft auf den Nudelstrang in einer Richtung senkrecht zu einer Bewegungsrichtung des Nudelstrangs, der von der Schneidwalze (10a, 10b) abgeschabt und von dem Abstreifer (20a, 20b) getrennt wurde, und der Breitenrichtung des Nudelstrangs ausübt.

3. Nudelstrangschneidvorrichtung (100) nach Anspruch 1 oder 2, wobei die Kammplatte (30a, 30b) einen plattenförmigen Teil (34a, 34b) aufweist, der sich entlang der Längsrichtung der Schneidwalzen (10a, 10b) und der Vielzahl der Vorsprüngen (32a, 32b) auf einer langen Seite des plattenförmigen Teils (34a, 34b) erstreckt, die sich in einer Richtung im Wesentlichen orthogonal zu der langen Seite erstrecken, und wobei der plattenförmige Teil (34a, 34b) der Kammplatte (30a, 30b) überlagert auf dem plattenförmigen Teil (24a, 24b) des Abstreifers (20a, 20b) angeordnet ist.

4. Nudelstrangschneidevorrichtung (100) nach einem der Ansprüche 1 bis 3, welche ferner eine Führung (40) zur Aufnahme der geschnittenen Nudelstränge aufweist.

5. Vorrichtung zur Nudelherstellung, welche die Nudelstrangschneidevorrichtung (100) nach einem der Ansprüche 1 bis 4 aufweist.

6. Verfahren zur Herstellung von Nudeln, bei dem ein aus Teig geformtes Nudelband mittels der Nudelstrangschneidvorrichtung (100) nach einem der Ansprüche 1 bis 4 in eine Vielzahl an Nudelsträngen geschnitten wird.

7. Verfahren zur Herstellung von Nudeln nach Anspruch 6, welches ferner ein Schneiden der Vielzahl der geschnittenen Nudelstränge in einzelne Mahlzeiteinheiten und ein Falten einer Vielzahl an in einzelne Mahlzeiteinheiten geschnittenen Nudelsträngen in der Hälfte oder ein Stapeln derselben in zwei Schichten umfasst.

8. Verfahren zur Herstellung von Nudeln nach Anspruch 6, welches ferner umfasst:
ein Dämpfen und ein Gelatinieren der Nudelstränge;
ein Schneiden der Nudelstränge in einzelne Mahlzeiteinheiten;
ein Falten der Nudelstränge in Hälften oder ein Stapeln in zwei Schichten; und
ein Trocknen der Nudelstränge,
wobei die Nudeln Instant-Nudeln sind.

## Revendications

1. Dispositif de coupe de brins de nouilles (100), comprenant :
une paire de rouleaux de coupe (10a, 10b), chacun présentant une pluralité de rainures annulaires (12a, 12b), qui sont agencées en parallèle de sorte que les rainures annulaires (12a, 12b) d'un premier rouleau de coupe (10a, 10b) se font face et engrènent avec celles de l'autre rouleau de coupe (10a, 10b), et
un racleur (20a, 20b) comprenant une partie en forme de plaque (24a, 24b) qui s'étend le long d'une direction longitudinale des rouleaux de coupe (10a, 10b) et une pluralité de saillies (22a, 22b) s'étendant sur un côté long de la partie en forme de plaque (24a, 24b) dans une direction sensiblement orthogonale au côté long, chacune de la pluralité de saillies (22a, 22b) étant configurée de manière à venir en prise avec une correspondante de la pluralité de rainures annulaires (12a, 12b) des rouleaux de coupe (10a, 10b) de sorte que des brins de nouilles dans la pluralité de rainures annulaires (12a, 12b) sont raclés à partir des rouleaux de coupe (10a, 10b), **caractérisé en ce que** le dispositif de coupe de brins de nouilles (100) comprend en outre :
une plaque peigne (30a, 30b) présentant une pluralité de saillies (32a, 32b) qui sont agencées de manière à s'aligner avec les centres de la pluralité de rainures annulaires (12a, 12b) le long de la direction longitudinale des rouleaux de coupe (10a, 10b), la pluralité de saillies (32a, 32b) étant configurées de manière à être agencées de manière alternée par rapport à la pluralité de rainures annulaires (12a, 12b) des rouleaux de coupe (10a, 10b) et à venir en contact avec les brins de nouilles dans des positions où les brins de nouilles ne sont pas en contact avec les rouleaux de coupe (10a, 10b) et la pluralité de saillies (22a, 22b) du racleur (20a, 20b).

2. Dispositif de coupe de brins de nouilles (100) selon la revendication 1, dans lequel la pluralité de saillies (32a, 32b) de la plaque peigne (30a, 30b) présente une forme surélevée qui confère une force sur le brins de nouilles dans une direction orthogonale à une direction de déplacement du brins de nouilles, qui a été raclé à partir du rouleau de coupe (10a, 10b) et séparé du racleur (20a, 20b), et la direction de largeur du brins de nouilles.

3. Dispositif de coupe de brins de nouilles (100) selon la revendication 1 ou 2, dans lequel la plaque peigne (30a, 30b) comprend une partie en forme de plaque (34a, 34b) qui s'étend le long de la direction longitudinale des rouleaux de coupe (10a, 10b) et la pluralité de saillies (32a, 32b) sur un côté long de la partie en forme de plaque (34a, 34b) qui s'étendent dans une direction sensiblement orthogonale au côté long, et la partie en forme de plaque (34a, 34b) de la plaque peigne (30a, 30b) est agencée de manière superposée sur la partie en forme de plaque (24a, 24b) du racleur (20a, 20b).

4. Dispositif de coupe de brins de nouilles (100) selon l'une quelconque des revendications 1 à 3, comprenant en outre un guide (40) pour recevoir les brins de nouilles coupés.

5. Appareil de production de nouilles comprenant le dispositif de coupe de brins de nouilles (100) selon l'une quelconque des revendications 1 à 4.

6. Procédé de production de nouilles, comprenant une coupe d'une ceinture de nouilles formée à partir de pâte en une pluralité de brins de nouilles en utilisant le dispositif de coupe de brins de nouilles (100) selon l'une quelconque des revendications 1 à 4.

7. Procédé de production de nouilles selon la revendication 6, comprenant en outre une coupe de la pluralité de brins de nouilles coupés en unités de repas uniques, et un pliage de la pluralité de brins de nouilles coupés en unités de repas uniques en deux ou leur empilement en deux couches.

8. Procédé de production de nouilles selon la revendication 6, comprenant en outre les étapes consistant à :
cuir à la vapeur et gélatiniser les brins de nouilles ;
couper les brins de nouilles en unités de repas uniques ;
plier les brins de nouilles en deux ou les empiler en deux couches ; et
sécher les brins de nouilles,
dans lequel les nouilles sont des nouilles instantanées.
